# EUROPÄISCHE PATENTSCHRIFT

(11) **EP 1 613 446 B1**
(45) Veröffentlichungstag und Bekanntmachung des Hinweises auf die Patenterteilung: **26.03.2008**
(21) Anmeldenummer: 04725307.5
(22) Anmeldetag: 02.04.2004
(51) Int. Cl.: B23K 26/24, B23K 33/00, B60J 5/00

(54) **VERFAHREN ZUR HERSTELLUNG VON ANBAUTEILEN FÜR EIN KRAFTFAHRZ EUNG UND NACH DIESEM VERFAHREN HERGESTELLTE ANBAUTEILE**
METHOD FOR PRODUCING ATTACHED PARTS FOR A VEHICLE AND THE THUS PRODUCED ATTACHED PARTS
PROCEDE POUR PRODUIRE DES PIECES RAPPORTEES POUR UN VEHICULE AUTOMOBILE ET PIECES RAPPORTEES PRODUITES SELON CE PROCEDE

(30) Priorität: 15.04.2003 DE 10317552
(43) Veröffentlichungstag der Anmeldung: 11.01.2006
(73) Patentinhaber: ThyssenKrupp Drauz Nothelfer GmbH, 74076 Heilbronn (DE)
(72) Erfinder: HUSNER, Jens, 66687 Wadern (DE); CORNELIUS, Peter, 54317 Kasel (DE); LUFT, Axel, 54317 Gusterath (DE)
(74) Vertreter: Dahlkamp, Heinrich-Leo
(86) Internationale Anmeldenummer: PCT/EP2004/003488
(87) Internationale Veröffentlichungsnummer: WO 2004/091843

(56) Entgegenhaltungen:
- EP-A- 0 200 997
- WO-A-03/022612
- DE-C- 19 932 415
- US-A- 5 221 585
- US-A1- 2001 029 702

## Beschreibung

Die Erfindung bezieht sich auf ein Verfahren zur Herstellung von Anbauteilen, wie Türen, Klappen und Kotflügel, für ein Kraftfahrzeug bestehend aus mindestens einem Innenblech und mindestens einem Außenblech, die getrennt voneinander hergestellt und anschließend an den Rändern zusammengefügt werden und auf ein Anbauteil für ein Kraftfahrzeug, hergestellt nach einem derartigen Verfahren.

Es gehört allgemein zum Stand der Technik, Innenblech und Außenblech durch Bördeln zu verbinden. Hierbei ist eine hohe Maßhaltigkeit der zu verbindenden Teile erforderlich und es müssen unter Umständen zusätzliche Maßnahmen, z.B. Aufbringung von Klebstoff, zur Herstellung einer dauerhaften Verbindung durchgeführt werden.

Aus der EP 200 997 B1 ist eine Schweißverbindung zweier Dünnbleche bekannt, von denen ein Außenblech eine optisch glatte Außenfläche bildet, dessen Rand um 180° auf seine rückwärtige Fläche umgebördelt ist und wobei das Innenblech auf den umgebördelten Rand des Außenbleches gelegt ist und die Verbindung des Innenbleches mit dem umgebördelten Rand mittels Laserstrahl von der der Außenfläche abgewandten Seite erfolgt. Zusätzlich kann hierbei auch das Innenblech im Randbereich um 180° gebördelt werden.

In der EP 855 965 B1 ist eine Kraftfahrzeugtür mit einem Innen- und einem Außenblech beschrieben, wobei die Randstreifen des Innen- und des Außenbleches abgebogen sind und die aufeinander gelegten Randstreifen dieser Bleche mit einem in den Spalt zwischen den beiden Randstreifen gerichteten Laserstrahl miteinander verschweißt werden. Die senkrechte Abkantung am gesamten Umfang der Bleche mit möglichst geringem Fügespalt führt zu aufwändigem Schachteln bzw. Positionieren der Teile zueinander. Der Spalt, der zum Schachteln erforderlich ist, wird dann zwischen den gegenüberliegenden Seiten gebildet und stellt somit den Fügespalt dar. Die erforderlichen Bauteiltoleranzen sind beim Tiefziehen kaum einzuhalten. Nachteilig ist auch, dass der Spalt nicht mehr durch Verschieben des Innenteils zu beeinflussen ist. Der Spalt kann nur durch Verformung des Aussenblechs reduziert werden, wobei die dadurch auftretenden Spannungen auf die Aussenhaut ausstrahlen und Einfallstellen erzeugen können.

In der DE 100 37 303 A1 ist ein Verfahren zur Herstellung einer Tür eines Kraftfahrzeuges beschrieben, wobei das Türinnenteil ganz oder teilweise aus Aluminium und das Türaußenblech vollständig aus Aluminium besteht. Hierbei wird der Randbereich des Türaußenbleches am gesamten Umfangsbereich um etwa 90° nach innen abgekantet und an einer bearbeiteten Stirnfläche des Tüinnenteiles für den Laserschweißvorgang zur Anlage gebracht. Auch bei der Herstellung dieser Tür, ist das Positionieren und Schachteln erschwert und es kommt zu der oben genannten Toleranz- Spalt- und Einfallstellen- Problematik.

Aus der DE 199 32 415 C1 ist außerdem ein gattungsgemäßes Verfahren zum Laserstrahlschweißen einer Kfz-Tür oder Kfz-Klappe beschrieben, bei dem die Ränder der zu verbindenden Bleche am gesamten Umfang der Tür in derselben Richtung nach innen abgebogen werden und die Bleche im Randbereich der Randstreifen unter Einhaltung eines Entgasungsraumes zusammengeschweißt werden. Auch bei diesem Verfahren muß am gesamten Umfang mit aufwendigen Mitteln für das Laserschweißen ein gleichmäßig dünner Fügespalt hergestellt werden.

Der Erfindung liegt die Aufgabe zu Grunde, ein Verfahren zur Herstellung eines Anbauteils vorzuschlagen, wobei eine hohe Prozesssicherheit aufgrund von vereinfachtem Schachteln und Positieren der Fügeteile zueinander bei gleichzeitiger Reduzierung der Fügespalte ermöglicht wird.

Zur Lösung dieser Aufgabe ist im Kennzeichen des Anspruches 1 vorgesehen, dass
a) an von außen sichtbaren Seiten (3, 4) im Randbereich des Anbauteiles das Außenblech (2) um bis zu 90° nach innen abgekantet wird, die zugehörigen Randbereiche (14 - 19) des Innenbleches (1) zur Minimierung des Spaltes gegen die Abkantung (7) des Außenbleches (2) geschoben werden und Innenblech (1) und Außenblech (2) durch einen in den Spalt zwischen den Randbereichen (14 - 19) des Innenbleches (1) und der Abkantung (7) des Außenbleches (2) gerichteten Laserstrahl (20) miteinander verschweißt werden und
b) an mindestens einer oder allen nicht sichtbaren Seiten (5, 6) im Randbereich des Anbauteiles, die der oder den sichtbaren Bereichen gegenüberliegen, die Ränder von Außenblech (2) und Innenblech (1) im Wesentlichen parallel zur Bauteilebene aufeinander gelegt und im Überlappstoß lasergeschweißt, oder in der Kehle der überlappenden Teile lasergeschweißt oder -gelötet werden.

Bei dem erfindungsgemäßen Verfahren weisen also Innen- und Außenblech der Anbauteile an den Rändern unterschiedliche Fügestellengeometrien auf und zwar abhängig davon, ob an diesen Seiten die zusammengefügten Randbereiche im Endzustand von außen sichtbar sind oder nicht. An den im eingebauten Zustand des Bauteiles von außen sichtbaren Seiten wird das Außenblech im Randbereich nach innen abgekantet, das Innenblech entsprechend gegen die Abkantung geschoben und in den Spalt zwischen den beiden angrenzenden Bereichen zum Verschweißen der Laserstrahl gerichtet. An den Randbereichen der im eingebauten Zustand des Bauteiles nicht sichtbaren Seiten des Anbauteiles werden die Ränder von Außenblech und Innenblech im Wesentlichen parallel zur Bauteilebene aufeinander gelegt und im Überlappstoß lasergeschweißt oder in der Kehle der überlappenden Teile lasergeschweißt oder -gelötet. Bei dem erfindungsgemäßen Verfahren können Innen- und Außenbleche, insbesondere an von außen sichtbaren Seiten mit hoher Prozeßsicherheit genau positioniert werden, wobei die angrenzenden, nach innen abgekanteten Ränder weitgehend vollständig zur Anlage kommen oder zumindest der Fügespalt, in den der Laserstrahl gerichtet wird, auf ein Minimum reduziert wird, indem der Toleranzausgleich an den nicht sichtbaren Kanten zwischen Innen- und Außenblech erfolgt.

In den Unteransprüchen sind ergänzende sinnvolle Maßnahmen wiedergegeben.

Es hat sich insbesondere als günstig erwiesen, jeweils zumindest an der Schwellerseite und/oder der Schlossseite einer Tür für Kraftfahrzeuge den sichtbaren Bereich des Außenbleches nach innen abzukanten und wie angegeben zusammenzufügen. Die jeweils gegenüberliegenden nicht sichtbaren, eben aufeinander liegendenden Randbereiche der Scharnierseite und/oder der Fensterseite des Türaußenbleches können dann in den Randbereichen mit dem Türinnenblech im Überlappstoß durch Laserschweißen oder in der Kehle der überlappenden Randbereiche durch Laserschweißen und -löten verbunden werden.

Zur Herstellung eines geeigneten Spaltes, in den der Laserstrahl positionsgenau gerichtet wird, hat es sich als günstig erwiesen, den Rand des Außenbleches um maximal 90° nach innen abzukanten. Die Randbereiche des Innenbleches können dann zum Zusammenfügen mit der Abkantung auch in entsprechender Weise nach innen oder außen abgekantet werden, wobei insbesondere die Abkantungen beider Bleche einen spitzen Winkel bilden. Die Randbereiche des Innenbleches können aber auch um bis zu 180° nach innen oder außen umgekantet werden, sodass der Außenrand an der Abkantung des Außenbleches zur Anlage kommt. Schließlich hat es sich auch als günstig erwiesen, die Stirnseite des Randbereiches des Innenbleches derartig abzuschrägen, dass sie zur Abkantung des Außenbleches ebenfalls einen spitzen Winkel bildet. Dieses hat sich insbesondere als günstig erwiesen, wenn der Randbereich des Innenbleches besonders dick ausgebildet ist.

Die Erfindung wird anhand der beigefügten Figuren 1 bis 9 beispielsweise anhand einer Tür für Kraftfahrzeuge näher erläutert. Es zeigen
- Fig. 1 + 2: schematisch Seitenansichten von Kraftfahrzeugtüren
- Fig. 3: einen Schnitt nach der Linie A - A von Fig. 2
- Fig. 4a - 4c: jeweils einen Schnitt nach der Linie B - B von Fig. 2
- Fig. 5 - 9: spezielle Ausführungsformen für einen Schnitt nach der Linie C - C von Fig. 1.

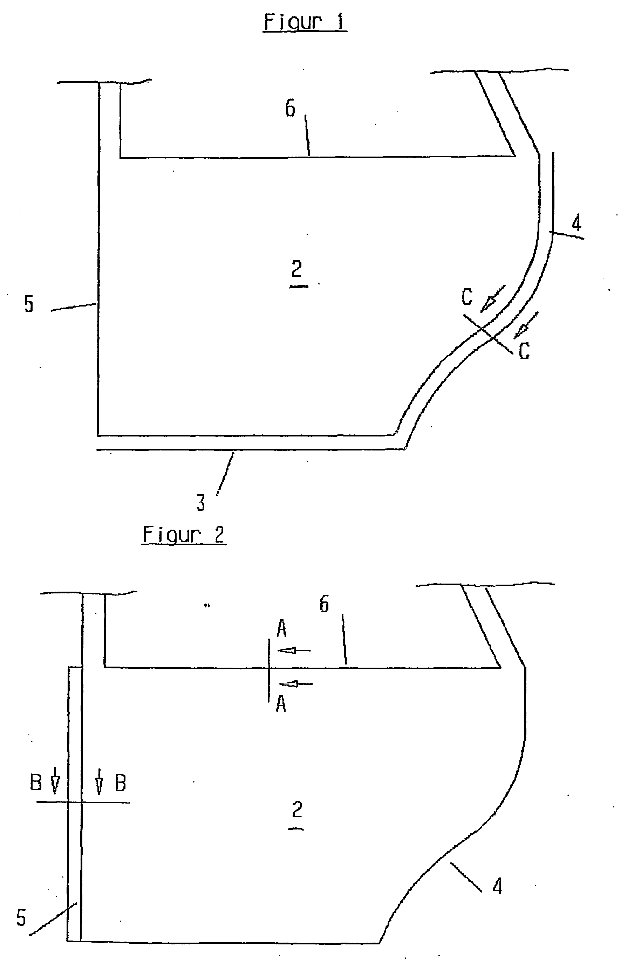

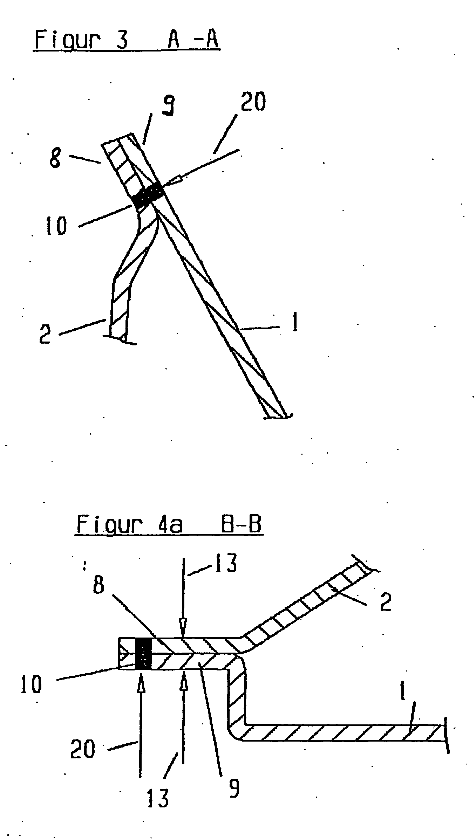

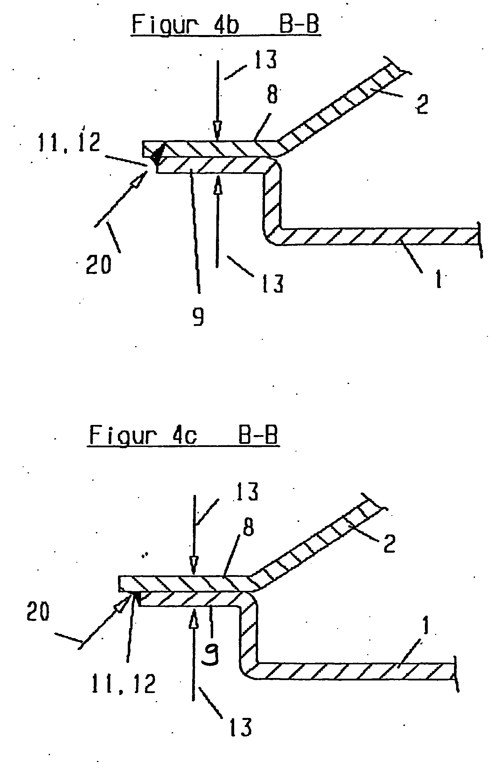

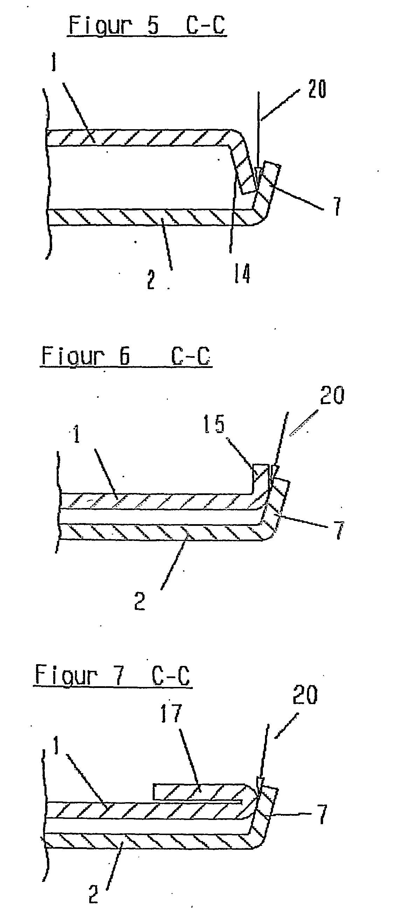

In den Figuren 1 und 2 ist eine hintere Seitentür eines PKW in der Seitenansicht von außen schematisch dargestellt, wobei die Schwellerseite 3 und die Schlossseite 4 die sogenannten sichtbaren Randbereiche und die Scharnierseite 5 und die Fensterseite 6 die nicht sichtbaren Randbereiche des Außenbleches 2 sind. Erfindungsgemäß werden also die Ränder des Außenbleches 2 an den Seiten 3 und 4 um bis zu 90° nach innen abgekantet. Diese Abkantung 7 ist in den Figuren 5 bis 9 dargestellt. An den gegenüberliegenden Seiten 5 und 6 sind die Randbereiche 8 des Außenbleches 2 nach Anbau des Bauteils nicht mehr sichtbar, da sie z.B. hinter dem vorderen Kotflügel oder unter dem Fenstergummi verschwinden. Wie in den Figuren 3 und 4 a bis 4 c dargestellt, werden diese Randbereiche 8 des Außenbleches 2 und die Randbereiche 9 des Innenbleches 1 z.B. mit Hilfe von Spannern 13 für den Schweißvorgang aufeinander gelegt, sodass mit Hilfe des Laserstrahles 20 im Überlappstoß die Laserschweißnaht 10 (vgl. Figuren 3 und 4 a) oder in der Kehle der überlappenden Teile eine Kehlschweißnaht 11 oder Laserlötnaht 12 (vgl. Figuren 4 b und 4 c) hergestellt wird.

In den Figuren 5 bis 9 sind bei einer im Wesentlichen identischen Abkantung 7 des Außenbleches 2 verschiedene Ausführungsformen für die Randbereiche 14 bis 18 des Innenbleches dargestellt. Das Innenblech 1 ist im äußeren Bereich zunächst im Wesentlichen parallel zum Außenblech 2 angeordnet. Nach Fig. 5 ist dann der Randbereich 14 etwas weniger als 90° zum Außenblech 2 hin abgekantet, sodass der Laserstrahl 20 in einen von dem Randbereich 14 und der Abkantung 7 gebildeten spitzen Winkel gerichtet wird. Bei Fig. 6 sind der Randbereich 15 und die Abkantung 7 beide zur PKW-Innenseite gerichtet und bilden ebenfalls einen spitzen Winkel für den Laserstrahl 20.

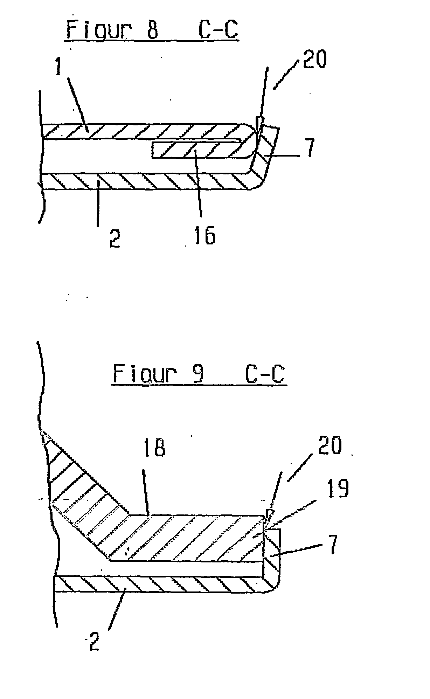

Bei den Figuren 7 und 8 sind die Randbereiche um 180° nach innen, Randbereich 17, bzw. nach außen, Randbereich 16 umgekantet. Dabei wird dann der Außenbogen des umgekanteten Innenbleches 1 an der Abkantung 7 zur Anlage gebracht, sodass der Laserstrahl 20 in den von dem Bogen und der Abkantung 7 gebildeten Spalt gerichtet wird (vgl. Figuren 7 und 8).

In Fig. 9 ist zumindest der Randbereich 18 des Innenbleches 1 erheblich dicker ausgebildet als bei den übrigen Ausführungsformen. Hier kann die Stirnseite 19, die vorzugsweise zusätzlich abgeschrägt wird, an der Abkantung 7 zur Anlage gebracht werden, sodass auch hier der Laserstrahl 20 in den spitzwinklig ausgebildeten Spalt gerichtet werden kann.

### Bezugszeichenliste:

- 1: Türinnenblech
- 2: Türaußenblech
- 3: Schwellerseite
- 4: Schlossseite
- 5: Scharnierseite
- 6: Fensterseite
- 7: Abkantung an 2
- 8: Randbereich von 2
- 9: Randbereich von 1
- 10: Laserschweißnaht
- 11: Kehlschweißnaht
- 12: Laserlötnaht
- 13: Spanner
- 14: Randbereich von 1
- 15: Randbereich von 1
- 16: Randbereich von 1
- 17: Randbereich von 1
- 18: Randbereich von 1
- 19: Stirnseite von 1
- 20: Laserstrahl

## Patentansprüche

1. Verfahren zur Herstellung von Anbauteilen, wie Türen, Klappen oder Kotflügel, für ein Kraftfahrzeug bestehend aus mindestens einem Innenblech (1) und mindestens einem Außenblech (2), die getrennt voneinander hergestellt und anschließend an den Rändern zusammengefügt werden, **dadurch gekennzeichnet, dass**
a) an von außen sichtbaren Seiten (3, 4) im Randbereich des Anbauteiles das Außenblech (2) um bis zu 90° (vgl. Fig. 5 - 9) nach innen abgekantet wird, die zugehörigen Randbereiche (14 - 19) des Innenbleches (1) zur Minimierung des Spaltes gegen die Abkantung (7) des Außenbleches (2) geschoben werden und Innenblech (1) und Außenblech (2) durch einen in den Spalt zwischen den Randbereichen (14 - 19) des Innenbleches (1) und der Abkantung (7) des Außenbleches (2) gerichteten Laserstrahl (20) miteinander verschweißt werden und
b) an mindestens einer oder allen nicht sichtbaren Seiten (5, 6) im Randbereich des Anbauteiles, die der oder den sichtbaren Bereichen gegenüberliegen, die Ränder (8, 9) von Außenblech (2) und Innenblech (1) im Wesentlichen parallel zur Bauteilebene aufeinander gelegt und im Überlappstoß lasergeschweißt ( vgl. Fig. 3 u. 4a), oder in der Kehle (11, 12) der überlappenden Ränder (8, 9) (vgl. Fig. 4b u. 4c) lasergeschweißt oder -gelötet werden.

2. Verfahren nach Anspruch 1, **dadurch gekennzeichnet, dass** an der Schwellerseite (3) und/oder Schlossseite (4) einer Tür für Kraftfahrzeuge der sichtbare Randbereich des Außenbleches (2) nach innen abgekantet wird.

3. Verfahren nach Anspruch 1 oder 2, **dadurch gekennzeichnet, dass** die nicht sichtbaren Randbereiche (8) der Scharnierseite (5) und/oder der Fensterseite (6) des Türaußenbleches (2) mit den Randbereichen (9) des Türinnenbleches (1) im Überlappstoß durch Laserschweißen oder in der Kehle (11, 12) der überlappenden Randbereiche (8, 9) durch Laserschweißen oder -löten verbunden werden.

4. Verfahren nach einem der vorhergehenden Ansprüche, **dadurch gekennzeichnet, dass** im sichtbaren Bereich, in dem das Außenblech (2) nach innen abgekantet wird, auch das Innenblech (1) in einem Randbereich (14 bis 17) ganz oder teilweise nach innen oder außen abgekantet wird (vgl. Fig. 5 - 8).

5. Verfahren nach Anspruch 4, **dadurch gekennzeichnet, dass** die Abkantung (7) des Außenbleches (2) zur Abkantung (14, 15) des Innenbleches (1) einen spitzen Winkel bildet (vgl. Fig. 5 u. 6).

6. Verfahren nach Anspruch 4 oder 5, **dadurch gekennzeichnet, dass** die Randbereiche (16, 17) des Innenbleches um bis zu 180° nach innen oder außen umgekantet werden (vgl. Fig. 7 u. 8).

7. Verfahren nach einem der vorhergehenden Ansprüche, **dadurch gekennzeichnet, dass** der Randbereich (18) des Innenbleches (1) parallel zum Außenblech (2) angeordnet und die Stirnseite (19) des Randes des Innenbleches (1) derartig abgeschrängt wird, dass sie zur Abkantung (7) des Außenbleches (2) einen spitzen Winkel bildet.

## Claims

1. Method for producing attached parts for a motor vehicle, for example doors, dampers, mudguards formed by at least one internal sheet (1) and at least one external sheet (2), said sheets being produced separately from each other and subsequently joined together at their edges, **characterized in that**
(a) the external sheet (2) is inwardly bent by up to 90° (compare FIGS. 5 - 9) at sides (3, 4) visible from outside in the edge area of the attached part, and that the pertaining edge areas (14 - 19) of the internal sheet (1) are shifted against the bend (7) of the external sheet (2) to minimize the gap, and that the internal sheet (1) and external sheet (2) are welded together by a laser beam (20) directed into the gap between the edge areas (14 - 19) of the internal sheet (1) and the bend (7) of the external sheet (2), and
(b) the edges (8, 9) of the external sheet (2) and internal sheet (1) are basically laid on each other in parallel to the component plane at one side at least or at all invisible sides (5, 6) in the edge area of the attached part lying opposite to the visible area(s) and are laser-welded in an overlap joint (compare FIGS. 3 and 4a) or laser-welded or laser-soldered in the fillet (11, 12) of the overlapping edges (8, 9) (compare FIGS. 4b and 4c).

2. A method according to claim 1, **characterized in that** the visible edge area of said external sheet (2) is inwardly bent at a sill side (3) and/or lock side (4) of a door for motor vehicles.

3. A method according to claim 1 or 2, **characterized in that** the invisible edge areas (8) of the hinge side (5) and/or of the window side (6) of the door external sheet (2) are connected with the edge areas (9) of the door internal sheet (1) in the overlap joint by laser welding or in the fillet (11, 12) of the overlapping edge areas (8, 9) by laser welding or laser soldering.

4. A method according to any one of the preceding claims, **characterized in that** in the visible area where the external sheet (2) is inwardly bent, the internal sheet (1), too, is wholly or partly bent inwardly or outwardly in an edge area (14 to 17) (compare FIGS. 5 - 8).

5. A method according to claim 4, **characterized in that** the bend (7) of the external sheet (2) forms an acute angle to the bend (14, 15) of the internal sheet (1) (compare FIGS. 5 and 6).

6. A method according to claim 4 or 5, **characterized in that** the edge areas (16, 17) of the internal sheet (1) are inwardly or outwardly bent by up to 180° (compare FIGS. 7 and 8).

7. A method according to any one of the preceding claims, **characterized in that** the edge area (18) of the internal sheet (1) is arranged in parallel to the external sheet (2) and that the front side (19) of the edge of the internal sheet (1) is so bevelled that it forms an acute angle to the bend (7) of the external sheet (2).

## Revendications

1. Procédé pour produire des pièces rapportées, telles que portes, clapets et ailes, pour un véhicule automobile, constituées d'au moins une tôle intérieure (1) et d'au moins une tôle extérieure (2), lesquelles sont fabriquées séparément l'une de l'autre et assemblées ensuite aux bords, **caractérisé en ce que**
a) la tôle extérieure (2) est pliée vers l'intérieur de 90° au maximum (cf. figures 5 à 9) sur les faces visibles de l'extérieur (3, 4) dans la zone marginale de la pièce rapportée, que les zones marginales correspondantes (14 à 19) de la tôle intérieure (1) sont poussées contre le bord de pliage (7) de la tôle extérieure (2) pour minimiser la fente et que la tôle intérieure (1) et la tôle extérieure (2) sont soudées l'une à l'autre au moyen d'un faisceau laser (20) dirigé dans la fente constituée entre les zones marginales (14 à 19) de la tôle intérieure (1) et du bord de pliage (7) de la tôle extérieure 2 et qu'
b) au moins sur l'une des faces non visibles (5, 6) ou sur toutes les faces non visibles (5, 6) de la zone marginale de la pièce rapportée, lesquelles sont opposées à la ou aux zones visibles, les bords (8, 9) de la tôle extérieure (2) et de la tôle intérieure (1) sont posés les uns sur les autres pour l'essentiel parallèlement au plan du composant et soudés au laser dans le joint de recouvrement (cf. figures 3 et 4a) ou bien soudés au laser ou encore brasés dans la gorge (11, 12) des bords chevauchants (8, 9) (cf. figures 4b et 4c).

2. Procédé selon la revendication 1, **caractérisé en ce que** sur la face bas de marche (3) et/ou sur la face serrure (4) d'une porte pour véhicules automobiles, la zone marginale visible de la tôle extérieure (2) est pliée vers l'intérieur.

3. Procédé selon la revendication 1 ou 2, **caractérisé en ce que** les zones marginales non visibles (8) de la face charnière (5) et/ou de la face fenêtre (6) de la tôle extérieure de la porte (2) sont assemblées aux zones marginales (9) de la tôle intérieure de la porte (1) par soudage au laser dans le joint de recouvrement ou bien par soudage au laser ou encore par brasure dans la gorge (11, 12) des zones marginales chevauchantes.

4. Procédé selon une des revendications précédentes **caractérisé en ce que** dans la zone visible dans laquelle la tôle extérieure (2) est pliée vers l'intérieur, la tôle intérieure (1) est également pliée entièrement ou en partie vers l'intérieur ou l'extérieur dans une zone marginale (14 à 17) (cf. figures 5 à 8).

5. Procédé selon la revendication 4, **caractérisé en ce que** le bord de pliage (7) de la tôle extérieure (2) constitue un angle aigu avec le bord de pliage (14, 15) de la tôle intérieure (1) (cf. figures 5 et 6).

6. Procédé selon la revendication 4 ou 5, **caractérisé en ce que** les zones marginales (16, 17) de la tôle intérieure sont pliées de 180° maximum vers l'intérieur ou l'extérieur (cf. figures 7 et 8).

7. Procédé selon une des revendications précédentes **caractérisé en ce que** la zone marginale (18) de la tôle intérieure (1) est disposée parallèlement à la tôle extérieure (2) et que la face de contact (19) du bord de la tôle intérieure (1) est biseautée de manière telle qu'elle constitue un angle aigu avec le bord de pliage (7) de la tôle extérieure (2).
